# EUROPEAN PATENT SPECIFICATION

(11) **EP 3 863 375 B1**
(45) Date of publication and mention of the grant of the patent: **08.04.2026**
(21) Application number: 20155591.9
(22) Date of filing: 05.02.2020
(51) Int. Cl.: H05B 45/12, H05B 47/105

(54) **LIGHTING CONTROL**
BELEUCHTUNGSSTEUERUNG
COMMANDE D'ÉCLAIRAGE

(43) Date of publication of application: 11.08.2021
(73) Proprietor: Helvar Oy Ab, 02150 Espoo (FI)
(72) Inventor: JUSLÉN, Henri, 02150 ESPOO (FI)
(74) Representative: Berggren Oy

(56) References cited:
- WO-A1-2009/129232
- WO-A1-2018/037002
- US-A1- 2014 265 897

## Description

### TECHNICAL FIELD

The example and non-limiting embodiments of the present invention relate to controlling operation of one or more luminaires of a lighting system based at least in part on observed light level.

### BACKGROUND

Various aspects related to lighting requirements for indoor work places are governed via applicable standards. As an example of such standard is the European Standard EN 12464-1, set by the European Committee for Standardization (CEN), which defines various aspects related lighting in working areas (or task areas) intended for different tasks and/or in adjacent areas in order to ensure visual comfort, visual performance and safety. As an example, in addition to required illuminance in actual task area, EN 12464-1 sets respective task-specific requirements for illuminance on surfaces such as walls and ceilings around the task area and provides recommendations for surface reflectance on the surfaces and major objects in the task area and its immediate surroundings. The illuminances on surfaces of a space and surface reflectances in the space serve as indications of an overall perceived brightness in the space include.

Consequently, configuration of a lighting system or lighting network arranged for illumination of a space intended as an indoor working place requires accounting for the requirements and recommendation of an applicable standard, such as EN 12464-1 described above. Due to various aspects of illuminance defined therein, there is a demand for straightforward lighting solutions that ensure accounting for the requirements and recommendations set for the illuminance of such spaces.

In related art, WO 2009/129232 A1 discloses a method and system for designing improved intelligent, LED-based lighting systems. The LED based lighting systems may include fixtures with one or more of rotatable LED light bars, integrated sensors, onboard intelligence to receive signals from the LED light bars and control the LED light bars, and a mesh network connectivity to other fixtures.

Further in related art, US 2014/265897 A1 discloses a load control device for controlling the amount of power delivered to an electrical load, where the load control device may include a rectifier circuit configured to receive a phase-control voltage and produce a rectified voltage. A power converter may be configured to receive the rectified voltage at an input and generate a bus voltage. An input capacitor may be coupled across the input of the power converter. The input capacitor may be adapted to charge when the magnitude of the phase control voltage is approximately zero volts. The power converter may be configured to operate in a boost mode, such that the magnitude of the bus voltage is greater than a peak magnitude of the input voltage. The power converter may be configured to operate in a buck mode to charge the input capacitor from the bus voltage when the magnitude of the phase-control voltage is approximately zero volts.

Further in related art, WO 2018/037002 A1 discloses a method and apparatus for controlling a lighting system for providing illumination of a space, in which detected inputs or triggers give rise to updated illumination settings or patterns of illumination. A determination is made as to whether such an update should be applied automatically, or whether confirmation from a user should be sought before making any changes.

### SUMMARY

It is an object of the present invention to provide a lighting system, a lighting control device and/or a luminaire that enables lighting design such that sufficient illuminance in an indoor space intended as a work place may be guaranteed in a straightforward manner.

According to the invention, a luminaire is provided as defined by the subject-matter of claim 1.

According to an embodiment a lighting system comprises one or more luminaires according to the luminaire of the present invention.

According to the invention a method for controlling operation of a luminaire is provided as defined in claim 10.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some logical components of a lighting system according to an example;
Figure 2 illustrates a block diagram of some logical components of a luminaire according to an example;
Figure 3 illustrates a block diagram of some logical components of a sensor unit according to an example;
Figure 4 illustrates a block diagram of some logical components of a lighting control server according to an example;
Figure 5 illustrates a block diagram of some logical components of a lighting system according to an example;
Figure 6 illustrates a block diagram of some logical components of a luminaire according to an example;
Figure 7 schematically illustrates physical arrangement of some elements of a lighting system according to an example,
Figure 8 illustrates a method according to an example;
Figure 9 illustrates a method according to an example; and
Figure 10 illustrates a block diagram of some elements of an apparatus according to an example.

### DESCRIPTION OF SOME EMBODIMENTS

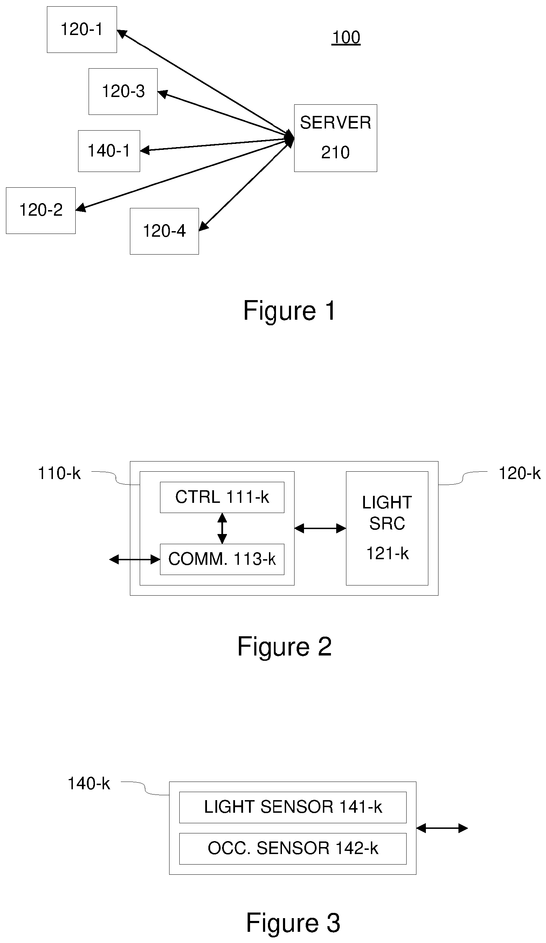

Figure 1 illustrates a block diagram of some logical components of a lighting system 100 according to an example, where the lighting system 100 includes luminaires 120-1, 120-2, 120-3, 120-4, a sensor unit 140-1 and a lighting control server 210. The luminaires 120-1 to 120-4 represent one or more luminaires 120-1 to 120-K, where an individual luminaire may be referred to via a reference number 120-k and where the number of luminaires K may be any suitable number selected according requirements of the specific lighting system and/or a space the lighting system 100 serves to illuminate.

The luminaire(s) 120-k and the sensor unit(s) 140-k are communicatively coupled to the lighting control server 210. The communicative coupling may be provided via wired or wireless communication medium, e.g. via a bus, via a wired or wireless communication network and/or via respective wired or wireless links. The lighting control server 210 is arranged to receive respective sensor data from the one or more sensor units 140 and to control at least some aspects of operation of the one or more luminaires 120 via respective communicative couplings. The luminaire(s) 120-k may be further communicatively coupled to each other and/or to the sensor unit 140-1. The one or more luminaires 120, the one or more sensor units 140 and the lighting control server 210 may be considered as nodes of a lighting network. The lighting control server 210 may be communicatively coupled to one or more other lighting control servers (of other lighting systems) and/or to one or more other entities, e.g. via a communication network such as the Internet.

While the lighting system 100 is depicted in Figure 1 with the single sensor unit 140-1 for graphical clarity of the illustration, in general case the lighting system 100 may comprise one or more sensor units 140-1, ..., 140-J, each arranged to monitor a respective sub-area of the space the lighting system 100 serves to illuminate. In this regard, an individual sensor unit may be referred to via a reference number 140-j and the number of sensor units J may be any suitable number selected according requirements of the specific lighting system 100 and/or the space the one or more luminaires 120 serve to illuminate.

The one or more luminaires 120 of the lighting system 100 may be provided for illuminating a working area in an indoor space intended for carrying out task(s) of predefined type. Such an indoor space may comprise, for example, an office room or an office space. As non-limiting examples, the working area illuminated by the one or more luminaires 120 may reside an office room or an office space intended for one of the task types defined in Table 6.26 of EN 12464-1, i.e. one of the following:
- Filing, copying, etc.
- Writing, typing, reading, data processing
- Technical drawing
- CAD work stations
- Conference and meeting rooms
- Conference table
- Reception desk
- Archiving

In other examples, the working area illuminated by the one or more luminaires 120 may reside in an indoor space intended to serve a purpose other than office, such as a space for industrial activities and crafts, retail premises, a place for public assembly, educational premises, health care premises, a warehouse, etc.

Figure 2 illustrates a block diagram of some logical components of a luminaire 120-k according to an example, where the luminaire 120-k comprises a lighting control device 110-k, at least one light source 121-k. The lighting control device 110-k comprises a lighting control means 111-k (e.g. a lighting control portion) for controlling the light output from the at least one light source 121-k and a communication means 113-k (e.g. a communication portion) for wired or wireless communication with other devices, e.g. with respective lighting control devices 110 of other luminaires 120 and/or with the lighting control server 210, the communication means 113-k thereby enabling the communicative coupling between nodes of the lighting network. The lighting control means 111-k is arranged to control light output of the luminaire 120-k based at least in part on control information received from the lighting control server 210. As an example in this regard, the lighting control means 111-k may be arranged to switch the light output from the luminaire 120-k on or off and/or adjust the light output from the luminaire 120-k in accordance with lighting control commands or requests received from the lighting control server 210.

The luminaire 120-k typically comprises various further elements, such as a driver device for supplying operating power to the at least one light source 121-k under control of the lighting control device 110-k and a housing in which elements of the luminaire 120-k are arranged. The driver device is designed to match characteristics of the at least one light source 121-k and it may be provided as an entity separate from the lighting control device 110-k or it may be at least partially integrated to the lighting control device 110-k. In a non-limiting example, the at least one light source 121-k comprises one or more light emitting diodes (LEDs) and the driver device comprises or is provided as a LED driver device, whereas in another non-limiting example the at least one light source 121-k comprises one or more fluorescent lamps and the driver device comprises or is provided as an electronic ballast.

The sensor unit 140-j comprises one or more sensors, e.g. one or more separate sensors that conceptually constitute the sensor unit 140-j, a sensor assembly comprising the one or more sensors, or a combination of one or more separate sensors and a sensor assembly comprising one or more sensors. The one or more sensors that constitute the sensor unit 140-j are provided together or as part of one or more of the luminaires 120. Each of the one or more sensors of the sensor unit 140-j is arranged for capturing a respective sensor signal for provision to the lighting control server 210 via the respective communicative coupling. Each sensor signal is descriptive of a respective environmental characteristic in the space the lighting system 100 serves to illuminate.

Figure 3 illustrates a block diagram of some logical components of the sensor unit 140-j, which comprises at least a light sensor 141-j for observing ambient light level in (a portion of) the space the lighting system 110 serves to illuminate and the sensor unit 140-j typically also comprises an occupancy sensor 142-j for monitoring an occupancy status (e.g. one of occupancy or non-occupancy) in (the portion of) the space the lighting system 100 serves to illuminate. As non-limiting examples, the light sensor 141-j may comprise a photodetector such as a photodiode and/or the occupancy sensor 142-j may comprise a motion sensor such as passive infrared (PIR) sensor. A light sensor signal from the light sensor 141-j and/or an occupancy sensor signal from the occupancy sensor 142-j may be employed by the lighting control server 210 for controlling the light output from the one or more luminaires 120 in dependence of the observed light level and/or in dependence of the observed occupancy status. Herein, the PIR sensor is a non-limiting example of an applicable type of occupancy sensor, while other examples include a microwave radar, a (digital) camera, a thermographic camera, a microphone, a lidar, etc.

In the lighting system 100, the one or more luminaires 120 are arranged to illuminate the working area, whereas the one or more sensor units 140 are arranged such that their respective light sensors 141 are arranged to observe light arriving from the direction of the working area but are not able to directly receive the light output from any of the one or more luminaires 120 while their respective occupancy sensors 142 are observing occupancy in the working area. Hence, the respective light sensor signal provided by the light sensor 141-j indicates observed level of reflected light arriving from the direction of the working area while the respective occupancy sensor 142-j indicates occupancy status in the working area.

In an example, the luminaires 120 and the sensor units 140 are arranged with respect to each other such that the one or more luminaires 120 are mounted on a ceiling such that they provide their respective light outputs downwards or substantially downwards to illuminate the working area below, whereas the one or more sensor units 140 are likewise mounted on the ceiling such that the respective light sensors 141 therein are directed downwards to receive light arriving from the direction of the working area below the sensor units 140. In such an arrangement, the light sensor 141-k does not receive any light directly from the luminaires 120 but receives light reflected from surfaces and objects in the space the lighting system 100 serves to illuminate, the respective light sensor signal provided from the light sensor 141-k thereby substantially indicating observed level of reflected light arriving from direction of the working area at or close to the ceiling.

In case the sensor unit 140-k also includes the occupancy sensor 142-k, the installation of the sensor unit 140-k in the space to be illuminated by the lighting system 100 needs also take into account suitable positioning of the occupancy sensor 142-k such that it is able to observe occupancy throughout or at least over a majority of (the respective portion of) the working area in a reliable manner, e.g. such that the occupancy sensor 142-j has an unobstructed or substantially unobstructed 'view' to (the respective portion of) the working area in its entirety or at least to a major part of (the respective portion of) the working area.

As described in the foregoing, the lighting control server 210 receives the light sensor signal(s) and it may receive the occupancy sensor signal(s) via the respective communicative couplings from the one or more sensor units 140 and use these sensor signal as part of the lighting control applied for the lighting system 100 via provision of lighting control commands via respective communicative couplings to the one or more luminaires 120.

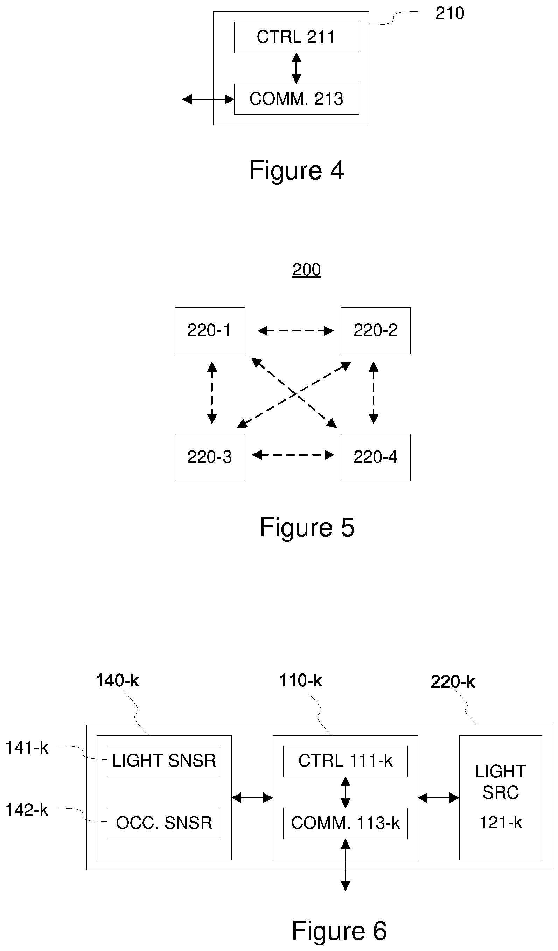

Figure 4 illustrates a block diagram of some logical components of the lighting control server 210, which comprises a lighting control means 211 (e.g. a control portion) and a communication means 213 (e.g. a communication portion) for wired or wireless communication with other devices, e.g. with respective lighting control devices 110 of the one or more luminaires 120 and/or with the one or more sensor units 140. The lighting control means 211 may be preprogrammed (or otherwise provided) with a lighting control logic that defines the manner of controlling the light output from the one or more luminaires 120 at least in part in dependence of the sensor signals received from the one or more sensor units 140. The preprogrammed lighting control logic may define one or more pairs of a predefined triggering condition and a lighting control action to be carried out as a response to an occurrence of the predefined triggering condition. Each such pair may be referred to as a respective lighting control rule and hence the lighting control logic may comprise one or more lighting control rules. A lighting control rule may, optionally, have one or more lighting control parameters associated therewith. The lighting control logic, including one or more lighting control rules and lighting control parameters possibly associated therewith, may be provided e.g. as program code stored in a memory in a device implementing the lighting control server 210, which program code will be executed by a processor in the device implementing the lighting control server 210.

As non-limiting examples concerning lighting control rules, a lighting control rule may define a triggering condition that directly or indirectly pertains to the occupancy sensor signal(s) received from the one or more sensor units 140 and/or a triggering condition that directly or indirectly pertains to the light sensor signal(s) received from the one or more sensor units 140.

The light output control provided by the lighting control server 210 may substantially arise from the lighting control means 211 therein implementing one or more lighting control rules of the lighting control logic defined for the lighting control means 211. However, for brevity and clarity of the description, in the following lighting control actions arising from implementation of the lighting control logic in the lighting control means 211 are predominantly described as operations carried out under control of the lighting control server 210.

As a non-limiting example, a (first) lighting control rule may define switching on the light output from each of the one or more luminaires 120 at a respective target light intensity *I_{tgt,k}* or otherwise adjusting the light output from the luminaire 120-k from a lower light intensity to the respective target light intensity *I_{tgt,k}* as a response to at least one of the occupancy sensor signals received at the lighting control server 210 indicating a change in occupancy status from non-occupancy to occupancy. As another non-limiting example, a (second) lighting control rule may define adjusting the light output from each of the one or more luminaires 120 to a respective stand-by light intensity *I_{off,k}* as a response to each of the occupancy sensor signals received at the lighting control server 210 having indicated a change of occupancy status from occupancy to non-occupancy followed by a switch-off delay period *T_{off,k}* without an indication of a change of occupancy status from non-occupancy to occupancy in any of the occupancy sensor signals received at the lighting control server 210. As a further non-limiting example, a (third) lighting control rule may define adjusting the light output from each of the one or more luminaires 120 to a respective intermediate light intensity *I_{dim,k}* where *(̅I_{off,k} < I_{dim,k} < I_{tgt,k}*) as a response to each of the occupancy sensor signals received at the lighting control server 210 having indicated a change of occupancy status from occupancy to non-occupancy followed by a dim-down delay period *T_{dim,k}* where (*T_{dim,k} < T_{off,k}*) without an indication of a change of occupancy status from non-occupancy to occupancy in any of the occupancy sensor signals received at the lighting control server 210. Switching on the light output and/or adjusting the light output of a luminaire 120-k to a given light intensity may be provided by using the communication means 213 to transmit a respective light control command to the luminaire 120-k via the respective communicative coupling.

Herein, a light intensity, such as any of the target light intensity *I_{tgt,k}*, the intermediate light intensity *I_{int,k}* and the stand-by light intensity *I_{off,k}*, may be defined as a (respective) percentage of the maximum light intensity of the luminaire 120-k. Adjusting the light intensity of the light output of the luminaire 120-k to a given value, e.g. to a given percentage of its maximum light intensity, results in adjusting the luminous flux of the light output from the luminaire 120-k accordingly. As non-limiting examples in this regard, the target light intensity *I_{tgt,k}* may be defined as a respective first predefined percentage of the maximum light intensity of the luminaire 120-k, for example a suitable value chosen from the range from 70 % to 100 %, e.g. 80 %, may be applied. Along similar lines, the intermediate light intensity *I_{int,k}* may be defined as a second respective predefined percentage of the maximum light intensity of the luminaire 120-k, for example a respective suitable value chosen from the range from 20 % to 50 %, e.g. 30 %, may be applied. Moreover, the stand-by light intensity *I_{off,k}* may be defined as a third respective predefined percentage of the maximum light intensity of the luminaire 120-k, for example a suitable value chosen from the range from 0 % to 20 %, e.g. 0 % or 10 %, may be applied.

The target light intensity *I_{tgt,k}*, the intermediate light intensity *I_{int,k}* and the stand-by light intensity *I_{off,k}* as well as the switch-off delay period *T_{off,k}*, the dim-down delay period *T_{dim,k}* described above serve as non-limiting examples of lighting control parameters that may be defined for the lighting control rules of the lighting control logic. According to an example, the lighting control parameters associated with at least some of the lighting control rules of the preprogrammed lighting control logic may be initially set to respective default values that are considered suitable for a wide variety of working area types and that are hence at least to some extent readily applicable for indoor working places regardless of any specific tasks they may be intended for. In another example, the lighting control parameters are set to respective default values that are considered suitable for the specific task assigned for the indoor working place the lighting system 100 serves to illuminate. Such setting of the lighting control parameters may be carried out, for example, upon installation, configuration or reconfiguration of the lighting control server 210.

As an example in this regard, setting the values for the above-described lighting control parameters for the one or more luminaires 120 may comprise storing, in the device implementing the lighting control server 210, respective lighting control parameters for a plurality of predefined working area types (e.g. two or more of those defined in Table 6.26 of EN 12464-1) and providing the lighting control server 210 with an indication of a selected one of the predefined working area types. Consequently, the lighting control means 211 adopts, for each of the one or more luminaires 120, the lighting control parameters stored in the memory for the selected one of the predefined working area types.

The lighting control means 211 may be arranged to control the respective light output from each of the one or more luminaires 120 in dependence of the observed light levels indicated in the respective light sensor signals received from the one or more sensor units 140 such that the resulting light level in combination with light from other light sources in the proximity of the luminaires 120 (e.g. ambient light and/or light from luminaires of other lighting systems) is kept at or close to a desired value. Such functionality may be referred to as light harvesting or daylight harvesting.

In order to provide the light harvesting functionality, the lighting control logic in the lighting control means 211 may define one or more lighting control rules that involve a respective triggering condition that pertains to one or more light sensor signals received at the lighting control server 210. In general, the one or more lighting control rules in this regard define adjusting, in dependence of the respective light levels indicated in the one or more light sensor signals, respective light intensities applied in the one or more luminaires 120 such that one or more predefined light level criteria are met. Such adjusting may comprise one of increasing or decreasing the respective light intensity of at least one of the one or more luminaires 120 as a response to the light sensor signals received at the lighting control server 210 indicating an overall light level that fails to meet the one or more predefined light level criteria, wherein said increasing or decreasing is carried out until the one or more predefined light level criteria are met.

In other words, when at least one of the one or more occupancy sensor signals received at the lighting control server 210 indicates occupancy, the lighting control means 211 may be arranged to apply the light sensor signals received at the lighting control server 210 as basis for adjusting the respective light output of at least one of the one or more luminaires 120 such that the light output from the one or more luminaires 120 in combination with light provided by other sources (e.g. ambient light and/or light received from luminaires of other lighting systems) provides illumination that meets the one or more predefined light level criteria.

According to an example, the one or more light level criteria may comprise a requirement that an average light level computed as an average of the respective light levels currently indicated in the one or more light sensor signals received at the lighting control server 210 is within a predefined margin ±*M_{tgt}* from a predefined target light level *L_{tgt}*. As an example, the currently indicated light level pertaining to a given light sensor signal may comprise the most recently received or derived light level basing on the given light sensor signal. In other words, the average light level comprises an average of light levels across the one or more light sensor signals, thereby representing an average level of light reflected from the working area. Non-limiting examples of applicable lighting control rules for implementing light intensity adjustment in case such light level criteria are not met include the following:
- a lighting control rule that defines increasing the light intensity applied for the respective light output from at least one of the one or more luminaires 120 as a response to the average light level being below the target light level *L_{tgt}* by more than the margin *M_{tgt}*; and
- a lighting control rule that defines decreasing the light intensity applied for the light output from at least one of the one or more luminaires 120 as a response to the average light level exceeding the target light level *L_{tgt}* by more than the margin *M_{tgt}*.

In the exemplifying lighting control rules above, increasing the light intensities of the one or more luminaires 120 may be continued until reaching an average light level that is within the margin ±*M_{tgt}* from the target light level *L_{tgt}* or until reaching a respective maximum light intensity of each of the one or more luminaires 120. Along similar lines, decreasing the light intensities of the one or more luminaires 120 may be continued until reaching an average light level that is within a predefined margin ±*M_{tgt}* from a predefined target light level *L_{tgt}* or until reaching a respective minimum light intensity of each of the one or more luminaires 120. Herein, the average of the light levels across the one or more light sensor signals is applied as a non-limiting example, whereas in other examples another measure of overall light level indicated in or derived based on the one or more light sensor signals may be applied instead.

The target light level *L_{tgt}* and the margin *M_{tgt}* may be set to respective fixed values, for example upon manufacturing, installation, configuration or reconfiguration of the lighting system 100 and/or the lighting control server 210 therein. In this regard, the value of the target light level *L_{tgt}* may be set and/or selected such that it results in a required or desired illuminance level in a part or position of interest within the space to be illuminated by the lighting system 100 in view of respective positions of the light sensor 141 in the space. As non-limiting examples, the position of interest may comprise a ceiling or a wall in said space whereas the desired illuminance level may be set in accordance with a lighting standard that defines characteristics of lighting in an indoor working space, such as the European Standard EN 12464-1 discussed in the foregoing. In a particular example, the light sensors 141 may be installed at or close to the ceiling of the space such that they are (primarily) observing light arriving from the direction of the working area illuminated by the one or more luminaires 120, while the target light level *L_{tgt}* may be set to a value that corresponds to the required or desired illuminance level at the ceiling. In an example, the required illuminance level may be a predefined one that is considered suitable for all or for a majority of tasks in the working area, e.g. 100 Ix. In another example, the required illuminance level may be selected in view of the (predefined) type of task for which the space illuminated by the lighting system 100 is intended. As a few examples, the required illuminance level at the ceiling may be e.g. 100 Ix, 125 Ix or 150 Ix, depending on the type of task for which the space illuminated by the lighting system 100 is intended.

In an example, the value applied as the target light level *L_{tgt}* may be a predefined one that is considered to correspond to the desired or required illuminance level at sufficient accuracy for a majority of installations of the sensor units 140 and the respective light sensors 141 therein. In another example, an applicable value for the target light level *L_{tgt}* corresponding to the desired or required illuminance level may be found, for example, via a manual calibration procedure comprising illuminance level measurements carried out in the space including the working area to be illuminated by the lighting system 100, e.g. by manually adjusting the light output from the one or more luminaires 120 such that the requested illuminance level at the position of interest in the space is provided and setting the target light level *L_{tgt}* at the lighting control server 210 accordingly. Herein, the adjustment of the respective light outputs of the luminaires 120 and setting the target light level *L_{tgt}* may be carried via a user interface of the lighting control server 210.

The margin *M_{tgt}* may be set and/or selected such that is provides a desired trade-off between keeping the illuminance level sufficiently close to the required level and avoiding continuous lighting control actions in order to ensure keeping the observed light level sufficiently close to the target light level *L_{tgt}*. As an example, the value of the margin *M_{tgt}* may be set based at least in part on respective locations of the light sensors 141 in the space (e.g. such that a relatively small margin is set for a scenario where the light sensor(s) 141 are predominantly installed at or close to the center of the space while a relatively large margin is set for a scenario where the light sensor(s) 141 are predominantly installed close to a wall or to a corner of the space).

Referring back to the lighting control rules that serve to provide the light harvesting functionality, as non-limiting examples, the increase or decrease in the respective light output of at least one of the one or more luminaires 120 in response to the light sensor signals received at the lighting control server 210 indicating the average light level that is outside the margin ±*M_{tgt}* from the target light level *L_{tgt}* may be provided using one or more of the following approaches:
- One of increasing or decreasing the respective light intensity applied for each of the one or more luminaires 120, substantially simultaneously, by a predefined amount until the average light level is within the margin ±*M_{tgt}* from the target light level *L_{tgt}* (or until reaching a maximum or minimum light intensity of the respective one of the one or more luminaires 120).
- One of increasing or decreasing the respective light intensity applied for a particular each of the one or more luminaires 120, one by one (e.g. in a round-robin manner), by a predefined amount until the average light level is within the margin ±*M_{tgt}* from the target light level *L_{tgt}* (or until reaching a maximum or minimum light intensity of the respective one of the one or more luminaires 120).
- One of increasing or decreasing the respective light intensity applied for a predefined subset of the one or more luminaires 120, substantially simultaneously, by a predefined amount until the average light level is within the margin ±*M_{tgt}* from the target light level *L_{tgt}* (or until reaching a maximum or minimum light intensity of the respective one of the one or more luminaires 120). In this regard, the predefined subset includes less than all the luminaires 120, for example a single luminaire 120-k.
- One of increasing the respective light intensity applied for that one of the one or more luminaires 120 that currently has the lowest light intensity or decreasing the respective light intensity applied for that one of the one or more luminaires 120 that currently has the highest light intensity until the average light level is within the margin ±*M_{tgt}* from the target light level *L_{tgt}* (or until reaching a maximum or minimum light intensity of the respective one of the one or more luminaires 120).

The approaches described above serve to ensure that illuminance level at the position of interest (e.g. at the ceiling) in the space the lighting system 100 serves to illuminate, on average, meets the predefined requirement. Consequently, bearing in mind that the light level(s) measured using the one or more sensor units 140 are indicative of light that is reflected from surfaces and objects in the actual working area within the space the lighting system 100 serves to illuminate and under the assumption that characteristics of the working area meet the recommendations and/or requirements set for surface reflectances in indoor working areas, the one-or-more-predefined-criteria meeting observed light level at the same time ensures that the illuminance requirement in the working area within the space illuminated by the lighting system 100 is likewise met. In other words, the present disclosure proceeds from the novel observation that in standard-conforming circumstances with respect to required illuminance levels (such as ones according to the European Standard EN 12464-1) sufficient illuminance level e.g. at the ceiling or at the wall arising from light reflected from the working area readily ensures sufficient illuminance level also in the working area.

In a further example, the choice of the luminaire(s) whose light intensity is increased or decreased and the respective amount of change in their light intensity in order to bring the average light level within the margin ±*M_{tgt}* from the target light level *L_{tgt}* may be adaptive such that the lighting control means 211 may be arranged to select a subset of the one or more luminaires 120 whose light intensity is to be adapted and/or to select respective amounts of change in the light intensity to be applied thereto based on history of changes applied in light intensities of the one or more luminaires 120 and the resulting changes in the observed light levels indicated in respective light sensor signals received from the one or more light sensors 141. Such adaptation may be based on an analysis of a history data stored in the course of operation of the lighting control server 210, where the history data comprises a history of changes in light intensity applied for the one or more luminaires and the resulting changes in the observed light levels indicated in the one or more light sensors signals. Based on such analysis the lighting control means 211 may learn, for example, one of the following:
- A change in the light intensity of a first subset of the one or more luminaires 120 may be found to have a significant effect on the average light level in comparison to other ones of the one or more luminaires 120. Consequently, the lighting control means 211 may be arranged to adapt its operation with respect to one of increasing or decreasing the light intensity of at least one of the one or more luminaires 120 in order to bring the average light level within the margin ±*M_{tgt}* from the target light level *L_{tgt}* such that the amount of change in light intensity for the luminaires 120 belonging to the first subset is larger than that applied for the other ones of the one or more luminaires 120 or such that the increase or decrease in light intensity only concerns the luminaires 120 belonging to the first subset.
- A change in the light intensity of a second subset of the one or more luminaires 120 may be found to have a negligible effect on the average light level in comparison to other ones of the one or more luminaires 120. Consequently, the lighting control means 211 may be arranged to adapt its operation with respect to one of increasing or decreasing the light intensity of at least one of the one or more luminaires 120 in order to bring the average light level within the margin ±*M_{tgt}* from the target light level *L_{tgt}* such that the amount of change in light intensity for the luminaires 120 belonging to the second subset is smaller than that applied for the other ones of the one or more luminaires 120 or such that the increase or decrease in light intensity only concerns luminaires 120 other than those belonging to the second subset.

In other words, the lighting control means 211 may learn, via the analysis of the history data, respective relationships between an amount of change in light intensity of a given luminaire 120-k and the resulting changes in the respective light levels indicated in the one or more light sensor signals for one or more (e.g. each of) the one or more luminaires 120 and, consequently, select a subset of the one or more luminaires 120 whose light intensity is to be adapted and/or to select respective amounts of change in the light intensity to be applied thereto accordingly in view of the respective light levels indicated in the one or more light sensor signals. As an example in this regard, the knowledge of the respective relationships between the amount of change in the light intensity of the one or more luminaires 120 and the resulting change in the observed light levels indicated in the one or more sensor signals may be applied to select the light intensity adjustment for increasing the light intensity to concern, for example, only that one of the one or more luminaires 120 that has the most significant effect (e.g. results in the highest increase in) the average light level or only those ones of the one or more luminaires that have a significant (e.g. a threshold-exceeding) effect on the average light level. Such selective light intensity adjustment may enable e.g. reduced energy consumption via avoidance of increasing light intensity of those ones of the luminaires 120 that do not have a significant contribution to the average light level.

Figure 5 illustrates a block diagram of some logical components of a lighting system 200 according to an example, where the lighting system 200 includes luminaires 220-1, 220-2, 220-3 and 220-4. The luminaires 220-1 to 220-4 represent one or more luminaires 220-1 to 220-K, where an individual luminaire may be referred to via a reference number 220-k and where the number of luminaires K may be any suitable number selected according requirements of the specific lighting system 200 and/or the space they serve to illuminate. The communicative coupling may be provided via wired or wireless communication medium, e.g. via a bus, via a wired or wireless communication network and/or via respective wired or wireless links. The luminaire(s) 220-k are communicatively coupled to each other via wired or wireless communication medium, e.g. via a wired or wireless communication network and/or via respective wired or wireless links. The one or more luminaires 220 may be considered as nodes of a lighting network.

Figure 6 illustrates a block diagram of some logical components of a luminaire 220-k according an example. The luminaire 220-k comprises the lighting control device 110-k, the at least one light source 121-k, whereas the lighting control device 110-k comprises the lighting control means 111-k and the communication means 113-k, as described in the foregoing in context of the luminaire 120-k. In the example illustrated in Figure 6, the luminaire 220-k further comprises the light sensor 141-k and the occupancy sensor 142-k and it may comprise one or more further sensors. In another example, the light sensor 141-k and the occupancy sensor 142-k, possibly together with one or more further sensors, may be arranged in a dedicated sensor unit 140-k that is communicatively coupled to the lighting control device 110-k in the luminaire 220-k. Along the lines described in the foregoing, regardless of the manner of arranging the sensors in the luminaire 220-k and/or in the dedicated sensor unit 140-k, each of the sensors is arranged to provide a respective sensor signal to the lighting control device 110-k and each sensor signal is descriptive of a respective environmental characteristics in the space the lighting system 200 serves to illuminate. In particular, the light sensor 141-k is arranged to provide a light sensor signal and the occupancy sensor 142-k is arranged to provide an occupancy sensor signal.

The communication means 113-k may comprise a wireless transceiver that is capable of communicating with wireless transceivers in respective lighting control devices 110 of other luminaires 220 using a wireless communication technique or protocol. The wireless communication may be provided by using a suitable short-range wireless communication technique known in the art that enables communication over ranges from a few meters up to a few hundred meters. Examples of suitable wireless communication techniques include Bluetooth, Bluetooth Low-Energy (LE), ZigBee, WLAN/Wi-Fi according to an IEEE 802.11 family of standards, etc. Further examples include infrared communications and other non-radio-based short-range communication techniques.

The choice of the communication technique and network topology for a specific embodiment of the lighting system 200 may depend e.g. on the required communication range and/or requirements with respect to energy-efficiency of the communication means. As a concrete non-limiting example, the wireless communication may rely on a wireless mesh network model, for example on a mesh network according to the Bluetooth or Bluetooth LE Mesh networking protocol known in the art.

Along the lines described in the foregoing in context of the lighting system 100, the one or more luminaires 220 are arranged such that their respective light outputs illuminate the working area while their respective light sensors 141 are observing light arriving from the direction of working area but they are not able to directly receive the light output from the one or more luminaires 120, whereas their respective occupancy sensor 142 are observing occupancy in the working area. The aspects and examples related to mounting of the one or more luminaires 120 and sensors of the one or more sensor units 140 in their operating environment described in the foregoing in context of the lighting system 100 are valid to the one or more luminaires 220 and their respective light sensors 141 and occupancy sensor 142 as well, *mutatis mutandis.*

The lighting control means 111-k may be preprogrammed (or otherwise provided) with a lighting control logic that defines the manner of controlling the light output from the luminaire 220-k at least in part in dependence of the sensor signals received from the sensors provided locally in or for the luminaire 220-k in a manner similar to that described in the foregoing for the lighting control means 211, *mutatis mutandis.* In this regard, the lighting control logic with respect lighting control rules that define switching the light output of the luminaire 220-k to the respective target light intensity *I_{tgt,k}*, to the respective stand-by light intensity *I_{off,k}* or to the respective intermediate light intensity *I_{dim,k}* are applicable in the manner described in the foregoing in context of the lighting control means 211, whereas resulting lighting control commands may be applied locally in the luminaire 220-k via the lighting control means 111-k controlling or adjusting the light output from the luminaire 220-k accordingly. Also the aspect of the setting the values for the lighting control parameters applied by the lighting control rules may follow the same approach described in the foregoing for the lighting control means 211, with the exception that respective lighting control parameters for a plurality of predefined working area types may be stored in each of the one or more luminaires 220 and the indication of the selected one of the predefined working area types may be provided to the one or more luminaires 220 by transmitting a respective lighting control command to each of the luminaires 220 via the respective communicative coupling. Herein, the selection of the predefined working area type may be carried out by or via a user-operable control device, such as a dedicated remote control device, a general-purpose mobile device (e.g. a mobile phone, a tablet computer, a laptop computer, etc.) or a general-purpose computer device (e.g. a tablet computer, a laptop computer, a desktop computer, etc.) provided with a software application that enables making the selection and using a communication means in the control device to transmit the selection to the one or more luminaires 220.

The lighting control means 111-k may be arranged to control the light output from each of the two or more luminaires 120 in dependence of the observed light levels indicated in the light sensor signal obtained locally at the luminaire 220-k with the aim of keeping the resulting light level in combination with light from other light sources in the proximity of the luminaire 220-k (e.g. light from the other ones of the one or more luminaires 220, ambient light and/or light from luminaires of other lighting systems) at or close to a desired value. As described in the foregoing, such functionality may be referred to as light harvesting or daylight harvesting and it may implemented via one or more lighting control rules that involve adjusting the light intensity applied for the at least one light source 121-k at the luminaire 220-k in response to an occurrence of a triggering condition that pertains to the light levels indicated in the local light sensor signal obtained at the lighting control device 110-k from the light sensor 141-k and/or on light levels observed at one or more other luminaires 220 of the lighting system 200. Examples in this regard are described in the following.

In the course of its operation, the lighting control device 110-k may apply the communication means 113-k to transmit status indication messages to the luminaires 220 of the lighting system 200. Such a status indication message may comprise, in addition to information defined by the applied communication protocol, one or more status indications that are descriptive of current (or recent) operating characteristic of the luminaire 220-k and/or the lighting control device 110-k transmitting the status indication message. According to the invention, the lighting control device 110-k receives status indication messages (and hence status indications) from one or more other luminaires 220 of the lighting system 200. A status indication and/or a status indication message conveying the status indication transmitted from the lighting control device 110-k may further comprise a device identifier assigned to the lighting control device 110-k (or to the luminaire 220-k), in other words an identification of the luminaire 220-k to which the status indication and/or the status message pertains. The device identifier may comprise, for example, an address, a serial number, a name, etc. assigned to the lighting control device 110-k (or that assigned to the luminaire 120-k) or to the communication means therein.

A status indication transmitted from the lighting control device 110-k may comprise an action indication that identifies a lighting control action taken by the lighting control device 110-k or a sensor indication that indicates a respective value derived based on a sensor signal obtained from a respective sensor of the sensor unit 140-k at the lighting control device 110-k. Non-limiting examples of status indications that may be transmitted from the lighting control device 110-k (and hence received at respective lighting control devices 110 of the one or more other luminaires 220-k) include the following:
- an action indication that indicates switching on the light output from the luminaire 220-k or an action indication that indicates switching off the light output from the luminaire 220-k;
- a light intensity indication that indicates adjusting or setting the light output from the luminaire 220-k to a light intensity indicated in the light intensity indication;
- an occupancy indication that indicates a current or the most recent occupancy status (occupancy or non-occupancy) derived based on the local occupancy sensor signal at the lighting control device 110-k;
- a light level indication that indicates a current or the most recent observed light level derived based on the local light sensor signal at the lighting control device 110-k.

The lighting control device 110-k may be arranged to transmit a status indication message comprising a respective action indication and/or a light intensity indication, for example, each time it takes a lighting control action that changes the light intensity of the light output from the luminaire 220-k and/or according to a predefined schedule (e.g. at predefined time intervals). The lighting control device 110-k may be arranged to transmit a status indication message comprising an occupancy indication and/or a light level indication, for example, according to a predefined schedule (e.g. at predefined time intervals) and/or in response to a change in the underlying local sensor signal (e.g. a change from occupancy to non-occupancy or vice versa, a change in observed light level that exceeds a predefined change threshold).

In order to enable transmission of the sensor indications according to the examples described above, the lighting control device 110-k may be arranged to store, in a memory therein, respective sensor indications derived based on the local occupancy sensor signal and on the local light sensor signal. The lighting control device 110-k may be further arranged to store the status indications received from the one or more other luminaires 220 in the memory to make them available for subsequent use in light intensity control by the lighting control means 111-k. The stored data may be referred to as history data and it may comprise respective histories of local occupancy indications, local light level indications, respective remote light level indications received from one or more other luminaires 220 and respective remote light intensity indications received from one or more other luminaires 220. The history data may cover a predefined time period and the indications included in the history data may be stored together with respective timing information that indicates the capturing time of the respective piece of stored data. The timing information may comprise, for example, a respective timestamp that indicates the time with respect to a predefined reference time.

According to an example, the operation of the lighting control means 111-k may proceed from the assumption that all status indications received thereat originate from other luminaires 220 arranged to illuminate the working area as part of the lighting system 200 and, consequently, the lighting control means 111-k may consider respective remote light level indications and remote light intensity indications received from any other luminaire in the course of the light intensity adjustment described in the foregoing. In another example, the lighting control means 111-k may be arranged to carry out a 'neighborhood detection' procedure to identify those luminaires whose light output is observable by the light sensor 141-k at the luminaire 220-k as the one or more other luminaires 220 of the lighting system 200.

Referring back to the one or more lighting control rules that may serve to provide the light harvesting functionality for the luminaire 220-k, the lighting control logic in the lighting control means 111-k may define one or more lighting control rules that define adjusting the light output from the luminaire 220-k in dependence of the respective light levels observed at luminaire 220-k and at the one or more other luminaires 220 in view of the respective light intensities applied for the light output of the luminaire 220-k and for light outputs of the one or more other luminaires 220. Such adjusting may comprise one of increasing or decreasing the light intensity applied for the light output of luminaire 220-k as a response to the local light sensor signal at the luminaire 220-k and the light level indications most recently received from the one or more other luminaires 220 indicating an overall light level that fails to meet one or more predefined light level criteria in view of the light intensity currently applied for the light output of the luminaire 220-k in comparison to the respective light intensities most recently indicated for the one or more other luminaires 220.

In other words, when the local occupancy sensor signal (from the occupancy sensor 142-k) received at the lighting control device 110-k indicates occupancy, the lighting control means 111-k therein may be arranged to apply a local occupancy indication derived based on the local sensor signal in the lighting control device 110-k and the remote light level indication received in respective status messages from the one or more other luminaires 220 as basis for adjusting the light intensity of the light output of the luminaire 220-k in view of the light intensity currently applied for the light output of the luminaire 220-k in comparison to the respective light intensities most recently indicated for the one or more other luminaires 220 in order to the lighting system 200 in its entirety to provide the desired or required illuminance level.

According **to** an example, the one or more light level criteria applied by the lighting control means 111-k may comprise a requirement that an average light level computed as an average of the light level indicated based on the local light sensor signal at the luminaire 220-k and the respective light levels indicated for the one or more other luminaires 220 (via the received remote light level indications) is within a predefined margin ±*M_{tgt}* from a predefined target light level *L_{tgt}*. As an example, the average light level may be computed as an average of the light level currently locally indicated in the luminaire 220-k and the respective light levels currently indicated for the one or more other luminaires 220. Herein the currently indicated light level pertaining to the luminaire 220-k may comprise the most recent one of the light level indications derived based on the local light sensor signal at the luminaire 220-k, whereas the currently indicated light level for a given other luminaire 220-j may comprise the most recent one of the light levels received for the given other luminaire 220-j. In other words, the average light level comprises an average of respective observed light levels across the one or more luminaires 220 of the lighting system 200, thereby representing an average level of light reflected from the working area. Non-limiting examples of applicable lighting control rules for implementing light intensity adjustment in case such light level criteria are not met include the following:
- a lighting control rule that defines increasing the light intensity applied for the light output of the luminaire 220-k as a response to meeting both of the following conditions:
   ∘ the average light level being below the target light level *L_{tgt}* by more than the margin *M_{tgt}*, and
   ∘ the light intensity currently applied for the light output of the luminaire 220-k being smaller than a reference light intensity computed as an average of the light intensity currently applied for the light output of the luminaire 220-k and the respective light intensities currently indicated for the one or more other luminaires 220;
- a lighting control rule that defines decreasing the light intensity applied for the light output of the luminaire 220-k as a response to meeting both of the following conditions:
   ∘ the average of the light level exceeding the target light level *L_{tgt}* by more than the margin *M_{tgt}*, and
   ∘ the light intensity currently applied for the light output of the luminaire 220-k being higher than the reference light intensity described above.

In the exemplifying lighting control rules above, light intensity currently indicated for a given other luminaire 220-j may comprise the light intensity indicated in the most recently received remote light level indication from the given other luminaire 220-j. In the exemplifying lighting control rules above, increasing the light intensity applied for the light output of the luminaire 220-k may be continued until the average light level is brought within the margin ±*M_{tgt}* from the target light level *L_{tgt}*, until reaching a light intensity that is higher than reference light intensity or until reaching a maximum light intensity of the luminaire 220-k. Along similar lines, decreasing the light intensity applied for the light output of the luminaire 220-k may be continued until the average light level is brough within the predefined margin ±*M_{tgt}* from the target light level *L_{tgt}*, until reaching a light intensity that is lower than the reference light intensity or until reaching a minimum light intensity of the luminaire 220-k.

According **to** a non-limiting example, the adjustment, i.e. the one of increasing or decreasing, the light intensity applied for the light output of the luminaire 220-k comprise, respectively, one of increasing or decreasing the light intensity applied for the light output of the luminaire 220-k by a predefined amount. Along the lines described in the foregoing, the light intensity may be defined via a percentage of the maximum light intensity of the luminaire 220-k and, consequently, increasing or decreasing the light intensity applied for the light output of the luminaire 220-k may comprise one of increasing or decreasing this percentage by a predefined amount accordingly. In another example, the adjustment may comprise one of increasing or decreasing, the light intensity applied for the light output of the luminaire 220-k in one step that brings the average light level within the margin ±*M_{tgt}* from the target light level *L_{tgt}.*

In a further example concerning the light intensity adjustment in the luminaire 220-k, the lighting control means 111-k may learn, based on the history data stored in the luminaire 220-k, a relationship between a change in light intensity applied for the light output of the luminaire 220-k and the corresponding change in the average light level and select the amount of change to be applied in the light intensity of the light output of the luminaire 220-k accordingly. As an example in this regard, the lighting control means 111-k may learn that any change in light intensity applied for the light output of the luminaire 220-k has a small or negligible effect on the average light level and, consequently, refrain from adjusting the light intensity applied for the light output of the luminaire 220-k above an upper reference light intensity *I_{ref.hi}* or below a lower reference light intensity *I_{ref.lo}* or completely refrain from making any adjustment to the light intensity applied for the light output of the luminaire 220-k in order to bring the average light level within the margin ±*M_{tgt}* from the target light level *L_{tgt}* (but rather rely on other luminaires 220 of the lighting system 200 to increase or decrease their respective light outputs accordingly). In yet further example, the most recent light intensity adjustment applied for the light output of the luminaire 220-k may have resulted e.g. from user input received via a control device (of a type described in the foregoing) or via a control panel arranged in the space that includes the working area illuminated by the lighting system 200 and, consequently, in such a scenario the lighting control means 111-k may be arranged refrain from making any adjustment to the light intensity applied for the light output of the luminaire 220-k in order to bring the average light level within the margin ±*M_{tgt}* from the target light level *L_{tgt}.*

The aspects and examples pertaining to determining and setting the target light level *L_{tgt}* and the margin *M_{tgt}* described in the foregoing in context of the lighting control server 210 apply to setting the target light level *L_{tgt}* and the margin *M_{tgt}* for the luminaire 220-k as well, *mutatis mutandis.* In context of the luminaire 220-k, however, the aspect of setting the target level *L_{tgt}* and the margin *M_{tgt}* may be carried out, for example, via the user-operable control device of the type described in the foregoing (in context of selection and setting of the working area type for the lighting system 200) that may be (further) arranged to receive user input that defines or selects the target level *L_{tgt}* and/or the margin *M_{tgt}* via its user interface and to use the communication means provided therein to transmit the defined or selected target level *L_{tgt}* and/or the margin *M_{tgt}* to the luminaire 220-k and/or to the one or more other luminaires 220.

The light harvesting functionality described in the foregoing in context of the lighting control means 113-k, 213 may be referred to as a 'bright background' feature due to the aspect of controlling the light output directed to the working area based at least in part on observed level of light reflected from the working area (which e.g. in case of using the light sensor 140-j, 140-k for measuring the reflected light at or close to the ceiling may be also referred to as a 'bright ceiling' feature). With the knowledge of having this feature available in the luminaires 120, 220, a lighting designer may define a lighting system design (including e.g. the number of luminaires, their characteristics and positions with respect to the working area) that ensures sufficient reflected lighting e.g. at the ceiling e.g. according to the European Standard EN 12464-1 which in turn guarantees sufficient lighting also in the working area without requiring dedicated further measures in this regard via a single calibration action that may be applied to set the target light level(s) *L_{tgt}* at the lighting control server 210 or at the respective lighting control devices 110 of the luminaires 220 accordingly.

The aspect of setting or selecting the target light level *L_{tgt}* for the lighting control rules applied in the lighting control means 113-k, 213 may further account for specific characteristics of the light sensor 140-k, 140-j and/or specific characteristics of the luminaire 120-k, 220-k, for example, with respect to one or more of the following aspects:
- A light sensing element of a light sensor 141-k, 141-j is typically arranged within a housing such that light may arrive thereat from through an opening provided in the housing. The shape of the opening, the distance between the opening and the light sensing element and the position of the opening with respect to the light sensing element define the direction(s) of light that contribute to the light level measured using the light sensor 141-k, 141-j. Consequently, derivation of the target light level *L_{tgt}* that may involve consideration of measurements carried out by a high-precision light meter may account for the above-described directionality of the light measurement by the light sensor 141-k, 141-j.
- The housing of the light sensor 141-k, 141-j is typically made of plastic that may not be fully opaque but may transmit some amount of light therethrough, thereby possibly enabling unintended reception of light directly from one or more of the luminaires 120, 220 at the light sensing element of the light sensor 141-k, 141-j. This aspect may be especially relevant in a luminaire 220-k where the light sensor 141-k is arranged in the same housing with the at least one light source 121-k. Consequently, derivation of the target light level *L_{tgt}* may, additionally or alternatively, consider such 'leakage' of light from the luminaire(s) 120, 220 to the light sensor.
- The light sensor 141-k, 141-j typically operates to convert the amount of light entering the light sensing element into an analog signal having a magnitude (such as a voltage) that is directly proportional to the amount of sensed light. For processing in the lighting control means 111-k, 121 the analog signal is converted into (a sequence of) digital light level indications using a suitable analog/digital (A/D) converter. In order to ensure accurate measurement close to the endpoints of the value range enabled by the A/D converter, the A/D conversion may be e.g. logarithmic or exponential at sub-ranges close to the endpoints of available value range while it may be linear between these sub-ranges. Consequently, the derivation of the target light level *L_{tgt}* may, additionally or alternatively, consider such non-linearity of the A/D conversion.

The examples described in the foregoing refer to the respective light levels indicated by the light sensor signals received from the one or more light sensors 141 and to the target light level *L_{tgt}* As an example in this regard, the light level indicated by a light sensor signal or by the target light level *L_{tgt}* may comprise a respective illuminance level, whereas in other examples the light level indicated by a light sensor signal or by the target light level *L_{tgt}* may comprise another measure of light level that may have a predefined relationship with the respective illuminance level in context of the lighting system 100.

According to an example, the luminaire 120-k, 220-k may enable operation in two or more different lighting modes in view of a first target light level *L*_{*tgt,*1} and a second target level *L_{tgt,2}*, where the first target light level *L*_{*tgt,*1} may correspond to a higher illuminance level and the second target light level *L*_{*tgt,*2} may correspond to the a lower illuminance level. In a first lighting mode, the aspects of operation of the lighting control means 111-k, 213 described in the foregoing with references to the lighting control rules that make use of respective triggering conditions and/or lighting control actions that at least in part rely on the target light level *L_{tgt}* may rely on the first target light level *L*_{*tgt,*1} instead, whereas in a second lighting mode these aspects of operation of the lighting control means 111-k, 211 may rely on the second target light level *L*_{*tgt,*2} instead of the target light level *L_{tgt}*, *mutatis mutandis.* In general, there may be further intermediate lighting modes for which the respective intermediate target light level *L_{tgt,i}* is set to a respective suitable value such that *L*_{*tgt,*2} *< L_{tgt,i} < L*_{*tgt,*1}*.,* whereas the following non-limiting further examples pertain to the scenario that involves only the first and second lighting modes.

Definition or selection of the second target light level *L*_{*tgt,*2} may be carried out as described in the foregoing for definition or selection of the target light level *L_{tgt}*, whereas the first target light level *L*_{*tgt,*1} may be derived by multiplying the second target light level *L*_{*tgt,*2} by a value that is greater than one and the depends of the (predefined) task type for which the working area illuminated by the lighting system 100, 200 is intended. Consequently, operation of the lighting system 100, 200 guarantees sufficient illuminance level in the working area when the lighting control means 111-k, 113 is operated in the second lighting mode. The first target light level *L*_{*tgt,*1}, which per description in the foregoing is higher than the second target light level *L*_{*tgt,*2}*,* ensures higher illuminance level in the working area, which may be required or beneficial for carrying out some tasks.

In addition to the dedicated target light levels *L*_{*tgt,*1}*, L*_{*tgt,*2}, the first and second modes may further define respective (different) values for one or more other lighting control parameters, such as the target light intensity *I_{tgt,k}*, the intermediate light intensity *I_{dim,k}*, the stand-by light intensity *I_{off,k},* the switch-off delay period *T_{off,k}* and/or the dim-down delay period *T_{dim,k}* described in the foregoing. In particular, such lighting control parameters for the first and second lighting modes may be set such, that the in the second lighting mode the light output from the luminaires 120, 220 is dimmed down to a lower light intensity and faster in comparison to the first lighting mode and/or the light output from the luminaires 120, 220 is switched off or adjusted to the stand-by light intensity *I_{off,k}* faster in comparison to the first lighting mode.

As an example, the selection of the applicable lighting mode may be entered by a user, e.g. via a control panel arranged in the space including the working are the lighting system 100, 200 serves to illuminate or via the user-operable control device of the type described in the foregoing. In another example, the lighting mode selection may be carried out automatically, for example according to one or more of the following non-limiting examples:
- The lighting control logic provided in the lighting control means 111-k, 113 may define one or more lighting control rules that define selecting one of the first and second lighting modes based on a predefined schedule. An example in this regard, involves defining usage of the first lighting mode during a first time period that may correspond to the office hours (e.g. from 8am to 6pm) and defining usage of the second lighting mode during a second time period that may correspond to non-working hours (e.g. from 6pm to 8 am).
- The lighting control logic provided in the lighting control means 111-k, 113 may define one or more lighting control rules that define selecting one of the first and second lighting modes in dependence of estimated activity level in the working area e.g. such that an activity level that exceeds an activity threshold results in using the first lighting mode whereas an activity level that fails to reach the activity threshold results in using the second lighting mode. As an example in this regard, the activity level may be derived based on the occupancy sensor signal (e.g. the number of PIR triggers may be considered to be directly proportional to the amount of activity in the monitored working area) or based on observed carbon dioxide level in the space including the working area.

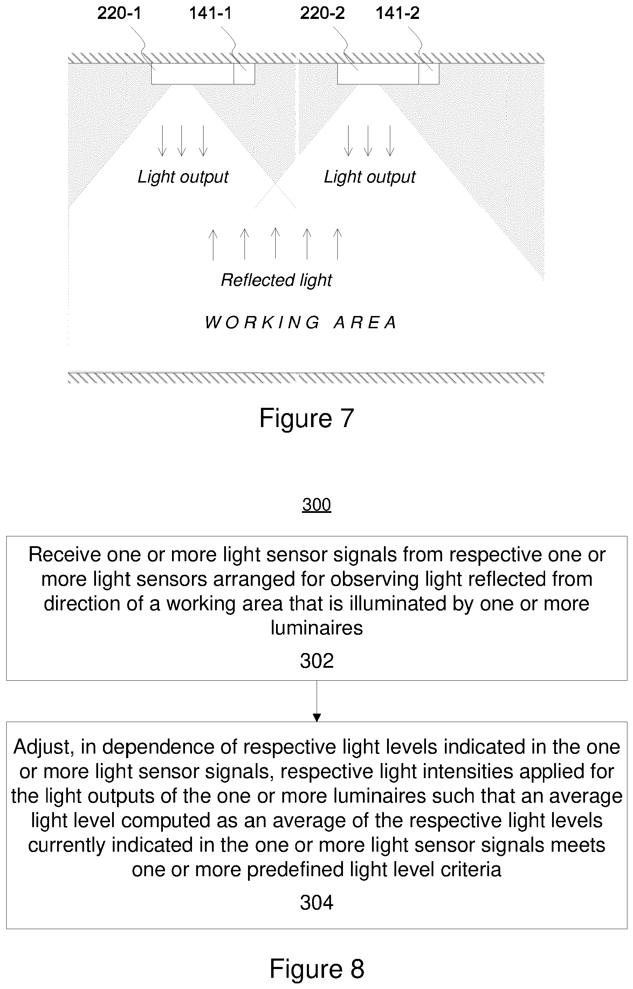

Figure 7 schematically illustrates a non-limiting example regarding physical arrangement of elements of the lighting system 200 in an indoor space that includes the working area to be illuminated by the lighting system 200. The example of Figure 7 represents a 'cross section' of the space with the hatched horizontal regions in the top and in the bottom of illustration representing, respectively, a ceiling of the space and a floor of the space. In this example, the lighting system comprises two luminaires 220-1, 220-2 arranged in the ceiling to provide their respective light outputs downwards towards the working area below. Each of the luminaires 220-1, 220-2 is provided with the respective sensor unit 140-1, 140-2 (not shown in the illustration) including the respective light sensor 141-1, 141-2 that is arranged to observe light that is reflected from the working area and installed such that the light sensors 141-1, 141-2 are not able to receive direct light output from any of the luminaires 220-1, 220-2.

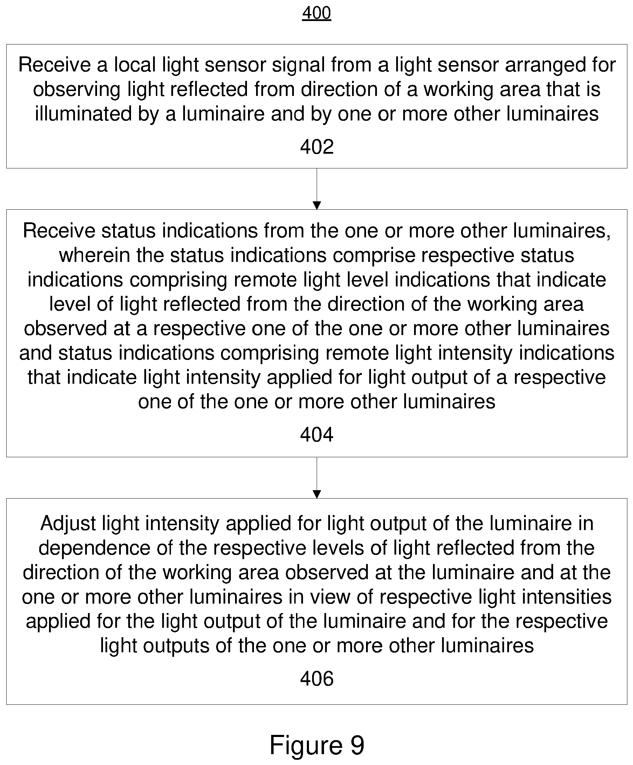

In the foregoing, various aspects related to lighting control are described with references to the lighting control server 210 and/or to the lighting control device 110-k, while these aspects of operation may be provided and/or described as steps of a respective method. As non-limiting examples in this regard, Figure 8 depicts a flowchart that illustrates steps of a method 300 that may be implemented by one or more apparatuses in order to provide the functionality described in the foregoing with references to the lighting control server 210, whereas Figure 9 depicts a flowchart that illustrates steps of a method 400 that may be implemented by one or more apparatuses in order to provide the functionality described in the foregoing with references to the lighting control device 110-k. Each of the methods 300, 400 may be varied in a number of ways without departing from the scope of the present disclosure, for example in accordance with the examples described in the foregoing and/or in the following.

The method 300 may be provided for controlling operation of the one or more luminaires 120 of the lighting system 100 arranged for illuminating the working area, wherein the method comprises receiving the one or more light sensor signals from the respective one or more light sensors 141 arranged for observing light reflected from direction of the working area, as indicated in block 302, and adjusting, in dependence of respective light levels indicated in the one or more light sensor signals, respective light intensities applied for the light outputs of the one or more luminaires 120 such that the average light level computed as an average of the respective light levels currently indicated in the one or more light sensor signals meets the one or more predefined light level criteria, as indicated in block 304.

The method 400 may be provided for controlling operation of a luminaire 120-k of the lighting system 200, wherein the method 400 comprises receiving the local light sensor signal from the light sensor 141-k arranged for observing light reflected from direction of the working area, as indicated in block 402. The method 400 further comprises receiving status indications from the one or more other luminaires 220, wherein the status indications comprise respective status indications comprising remote light level indications that indicate level of light reflected from the direction of the working area observed at a respective one of the one or more other luminaires 220 and status indications comprising remote light intensity indications that indicate light intensity applied for light output of a respective one of the one or more other luminaires 220, as indicated in block 404. The method 400 further comprises adjusting the light intensity applied for the light output of the luminaire 220-k in dependence of the respective levels of light reflected from the direction of the working area observed at the luminaire 220-k and at the one or more other luminaires 220 in view of respective light intensities applied for the light output of the luminaire 220-k and for the respective light outputs of the one or more other luminaires 220, as indicated in block 406.

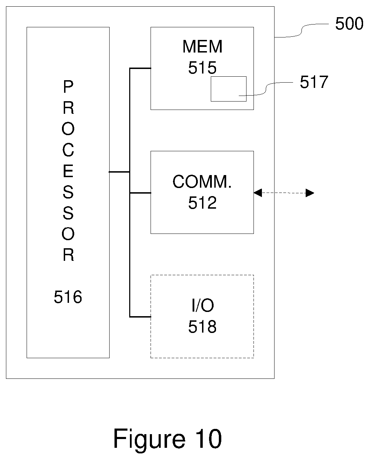

Figure 10 illustrates a block diagram of some components of an exemplifying apparatus 500. The apparatus 500 may comprise further components, elements or portions that are not depicted in Figure 10. The apparatus 500 may be referred to as a computing apparatus and it may be employed e.g. in implementing at least some of the respective operations, procedures and/or functions described in the foregoing in context of the lighting control server 210 and in context of the lighting control device 110-k.

The apparatus 500 comprises a processor 516 and a memory 515 for storing data and computer program code 517. The memory 515 and a portion of the computer program code 517 stored therein may be further arranged to, with the processor 516, to implement at least some of the respective operations, procedures and/or functions described in the foregoing in context of the lighting control server 210 and in context of the lighting control device 110-k.

The apparatus 500 comprises a communication portion 512 for communication with other devices. The communication portion 512 comprises at least one communication apparatus that enables wired or wireless communication with other apparatuses. A communication apparatus of the communication portion 512 may also be referred to as a respective communication means and it may be applied to implement the communication means 213 of the lighting control server 210 or the communication means 113-k of the lighting control device 110-k.

The apparatus 500 may, optionally, further comprise one or more user I/O (input/output) components 518 that may be arranged, possibly together with the processor 516 and a portion of the computer program code 517, to provide a user interface for receiving input from a user of the apparatus 500 and/or providing output to the user of the apparatus 500 to control at least some of the respective operations, procedures and/or functions described in the foregoing in context of the lighting control server 210 and in context of the lighting control device 110-k implemented by the apparatus 500. The user I/O components 518 may comprise hardware components such as a display, a touchscreen, a touchpad, an arrangement of one or more keys or buttons, etc. The user I/O components 518 may be also referred to as peripherals. The processor 516 may be arranged to control operation of the apparatus 500 e.g. in accordance with a portion of the computer program code 517 and possibly further in accordance with the user input received via the user I/O components 518 and/or in accordance with information received via the communication portion 512.

Although the processor 516 is depicted as a single component, it may be implemented as one or more separate processing components. Similarly, although the memory 515 is depicted as a single component, it may be implemented as one or more separate components, some or all of which may be integrated/removable and/or may provide permanent / semi-permanent/ dynamic/cached storage.

The computer program code 517 stored in the memory 515, may comprise computer-executable instructions that control one or more aspects of operation of the apparatus 500 when loaded into the processor 516. As an example, the computer-executable instructions may be provided as one or more sequences of one or more instructions. The processor 516 is able to load and execute the computer program code 517 by reading the one or more sequences of one or more instructions included therein from the memory 515. The one or more sequences of one or more instructions may be configured to, when executed by the processor 516, cause the apparatus 500 to carry out at least some of the respective operations, procedures and/or functions described in the foregoing in context of the lighting control server 210 and in context of the lighting control device 110-k.

Hence, the apparatus 500 may comprise at least one processor 516 and at least one memory 515 including the computer program code 517 for one or more programs, the at least one memory 515 and the computer program code 517 configured to, with the at least one processor 516, cause the apparatus 500 to perform at least some of the respective operations, procedures and/or functions described in the foregoing in context of the lighting control server 210 and in context of the lighting control device 110-k.

The computer programs stored in the memory 515 may be provided e.g. as a respective computer program product comprising at least one computer-readable non-transitory medium having the computer program code 517 stored thereon, the computer program code, when executed by the apparatus 500, causes the apparatus 500 at least to perform at least some of the respective operations, procedures and/or functions described in the foregoing in context of the lighting control server 210 and in context of the lighting control device 110-k. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described.

In the present disclosure, although functions have been described with reference to certain features, those functions may be performable by other features whether described or not. Although features have been described with reference to certain embodiments, those features may also be present in other embodiments whether described or not.

## Claims

1. A luminaire (220-k) for illuminating a working area as part of a lighting system (200) comprising one or more other luminaires (220), wherein the luminaire (220-k) comprises a lighting control device (110-k) and a sensor unit (140-k) comprising a light sensor (141-k), the lighting control device (110-k) comprising:
a lighting control means (111-k) for controlling light output from the luminaire (220-k) based at least in part on a local light sensor signal received from said light sensor (141-k); and
a communication means (113-k) for communication with the one or more other luminaires (220) of the lighting system (200), the communication means (113-k) arranged to receive status indications from the one or more other luminaires (220),
**characterized in that** the light sensor (141-k) is adapted to observe level of light reflected from direction of the working area while not directly receiving light output from said luminaires (220-k, 220) of the lighting system (200),
wherein the status indications comprise respective status indications comprising remote light level indications that indicate level of light reflected from direction of the working area observed at a respective one of the one or more other luminaires (220) and status indications comprising remote light intensity indications that indicate light intensity applied for light output of a respective one of the one or more other luminaires (220), and
wherein the lighting control means (111-k) is arranged to adjust a light intensity applied for the luminaire (220-k) in dependence of said respective levels of light reflected from direction of the working area observed at the luminaire (220-k) and at the one or more other luminaires (220) in view of respective light intensities applied for the light output of the luminaire (220-k) and for the respective light output of the one or more other luminaires (220).

2. A luminaire (220-k) according to claim 1, wherein the lighting control means (111-k) is arranged to one of increase or decrease the respective light intensity applied for the light output of the luminaire (220-k) as a response to an average light level derived based on a local light level indication derived based on the local light sensor signal and on the respective remote light level indications received from the one or more other luminaires (220) indicating an overall light level that fails to meet one or more predefined light level criteria in view of the light intensity currently applied for the light output of the luminaire 220-k in comparison to the respective light intensities indicated for the one or more other luminaires 220.

3. A luminaire (220-k) according to claim 2, wherein the lighting control means (111-k) is arranged to increase the light intensity applied for the light output of the luminaire (220-k) as a response to
an average light level computed as an average of the local light level indication and the respective remote light level indications received from the one or more other luminaires (220) being below a predefined target light level by more than a predefined margin, and
the light intensity currently applied for the light output of the luminaire (220-k) being smaller than a reference light intensity computed as an average of the light intensity currently applied for the light output of the luminaire (220-k) and respective light intensities currently indicated for the one or more other luminaires (220).

4. A luminaire (220-k) according to claim 2 or 3, wherein the lighting control means (111-k) is arranged to decrease the light intensity applied for the light output of the luminaire (220-k) as a response to
the average light level computed as an average of the local light level indication and the respective remote light level indications received from the one or more other luminaires (220) exceeding the predefined target light level by more than the predefined margin, and
the light intensity currently applied for the light output of the luminaire (220-k) being higher than the reference light intensity computed as an average of the light intensity currently applied for the light output of the luminaire (220-k) and respective light intensities currently indicated for the one or more other luminaires (220).

5. A luminaire (220-k) according to any of claims 2 to 4, wherein said one of increasing or decreasing comprises, respectively, one of increasing or decreasing the light intensity applied for the light output of the luminaire (220-k) by a predefined amount.

6. A luminaire (220-k) according to any of claims 3 to 5, wherein the predefined target light level corresponds to a desired or required illuminance level at a predefined position of a space including the working area the lighting system (100, 200) serves to illuminate.

7. A luminaire (220-k) according to claim 6, wherein said predefined position comprises a ceiling of the space including the working area the lighting system (100, 200) serves to illuminate.

8. A luminaire (220-k) according to claim 6 or 7, wherein said desired or required illuminance level is substantially 100 Ix.

9. A lighting system (200) comprising one or more luminaires (220) according to the luminaire (220-k) of any of claims 1 to 8 for illuminating a working area in an indoor space.

10. A method (400) in a lighting control device (110-k) of a luminaire (220-k) arranged for controlling operation of the luminaire (220-k) for illuminating a working area as part of a lighting system (200) comprising one or more other luminaires (220), the method (400) comprising:
receiving (402) a local light sensor signal from a light sensor (141-k) of a sensor unit (140-k) of the luminaire; and
receiving (404) status indications from the one or more other luminaires (220),
**characterized in that** the local light sensor signal is descriptive of level of light reflected from direction of the working area while not being indicative of direct light output from said luminaires (220-k, 220) of the lighting system (200),
wherein the status indications comprise respective status indications comprising remote light level indications that indicate level of light reflected from direction of the working area observed at a respective one of the one or more other luminaires (220) and status indications comprising remote light intensity indications that indicate light intensity applied for light output of a respective one of the one or more other luminaires (220), and
wherein the method (400) further comprises adjusting (406) a light intensity applied for the luminaire (220-k) in dependence of said respective levels of light reflected from direction of the working area observed at the luminaire (220-k) and at the one or more other luminaires (220) in view of respective light intensities applied for the light output of the luminaire (220-k) and for the respective light output of the one or more other luminaires (220).

## Patentansprüche

1. Leuchte (220-k) zum Beleuchten eines Arbeitsbereichs als Teil eines Beleuchtungssystems (200), das eine oder mehrere andere Leuchten (220) umfasst, wobei die Leuchte (220-k) eine Beleuchtungssteuervorrichtung (110-k) und eine Sensoreinheit (140-k) umfasst, die einen Lichtsensor (141-k) umfasst, wobei die Beleuchtungssteuervorrichtung (110-k) Folgendes umfasst:
ein Beleuchtungssteuermittel (111-k) zum Steuern einer Lichtausgabe von der Leuchte (220-k) wenigstens teilweise basierend auf einem lokalen Lichtsensorsignal, das von dem Lichtsensor (141-k) empfangen wird; und
ein Kommunikationsmittel (113-k) zur Kommunikation mit der einen oder den mehreren anderen Leuchten (220) des Beleuchtungssystems (200), wobei das Kommunikationsmittel (113-k) dazu eingerichtet ist, Statusindikationen von der einen oder den mehreren anderen Leuchten (220) zu empfangen,
**dadurch gekennzeichnet, dass** der Lichtsensor (141-k) dazu eingerichtet ist, einen Pegel von Licht zu beobachten, das aus einer Richtung des Arbeitsbereichs reflektiert wird, während er eine Lichtausgabe von den Leuchten (220-k, 220) des Beleuchtungssystems (200) nicht direkt empfängt,
wobei die Statusindikationen jeweilige Statusindikationen, die Fernlichtpegelindikationen umfassen, die einen Pegel von aus einer Richtung des Arbeitsbereichs reflektierten Licht angeben, welcher an einer jeweiligen der einen oder mehreren anderen Leuchten (220) beobachtet wird, und Statusindikationen, die Fernlichtintensitätsindikationen umfassen, die eine Lichtintensität angeben, die für eine Lichtausgabe einer jeweiligen der einen oder mehreren anderen Leuchten (220) angewandt wird, umfassen, und
wobei das Beleuchtungssteuermittel (111-k) dazu eingerichtet ist, eine für die Leuchte (220-k) angewandte Lichtintensität in Abhängigkeit von den jeweiligen Pegeln von aus einer Richtung des Arbeitsbereichs reflektiert Lichts, welche bei der Leuchte (220-k) und bei der einen oder den mehreren anderen Leuchten (220) beobachtet werden, in Hinblick auf jeweilige Lichtintensitäten, die für die Lichtausgabe der Leuchte (220-k) und für die jeweilige Lichtausgabe der einen oder der mehreren anderen Leuchten (220) angewandt werden, anzupassen.

2. Leuchte (220-k) nach Anspruch 1, wobei das Beleuchtungssteuermittel (111-k) dazu eingerichtet ist, die jeweilige Lichtintensität, die für die Lichtausgabe der Leuchte (220-k) angewandt wird, als Reaktion darauf zu erhöhen oder zu verringern, dass ein durchschnittlicher Lichtpegel, der basierend auf einer lokalen Lichtpegelindikation, die basierend auf dem lokalen Lichtsensorsignal abgeleitet wird, und auf den jeweiligen Fernlichtpegelindikationen abgeleitet wird, die von der einen oder den mehreren anderen Leuchten (220) empfangen werden, einen Gesamtlichtpegel angibt, der eine oder mehrere vordefinierte Lichtpegelkriterien in Hinblick auf die aktuell für die Lichtausgabe der Leuchte 220-k angewandte Lichtintensität im Vergleich zu den jeweiligen für die eine oder die mehreren anderen Leuchten 220 angegebenen Lichtintensitäten nicht erfüllt.

3. Leuchte (220-k) nach Anspruch 2, wobei das Beleuchtungssteuermittel (111-k) dazu eingerichtet ist, die für die Lichtausgabe der Leuchte (220-k) angewandte Lichtintensität als Reaktion darauf zu erhöhen, dass
ein durchschnittlicher Lichtpegel, der als ein Durchschnitt der lokalen Lichtpegelindikation und der jeweiligen Fernlichtpegelindikationen berechnet wird, die von der einen oder den mehreren anderen Leuchten (220) empfangen werden, um mehr als eine vordefinierte Spanne unterhalb eines vordefinierten Ziellichtpegels liegt, und
wobei die aktuell für die Lichtausgabe der Leuchte (220-k) angewandte Lichtintensität kleiner als eine Referenzlichtintensität ist, die als ein Durchschnitt der aktuell für die Lichtausgabe der Leuchte (220-k) angewandte Lichtintensität und jeweiliger aktuell für die eine oder die mehreren anderen Leuchten (220) angegebener Lichtintensitäten berechnet wird.

4. Leuchte (220-k) nach Anspruch 2 oder 3, wobei das Beleuchtungssteuermittel (111-k) dazu eingerichtet ist, die für die Lichtausgabe der Leuchte (220-k) angewandte Lichtintensität als Reaktion darauf zu verringern, dass der durchschnittlicher Lichtpegel, der als ein Durchschnitt der lokalen Lichtpegelindikation und der jeweiligen Fernlichtpegelindikationen berechnet wird, die von der einen oder den mehreren anderen Leuchten (220) empfangen werden, den vordefinierten Ziellichtpegel um mehr als die vordefinierte Spanne überschreitet, und
wobei die aktuell für die Lichtausgabe der Leuchte (220-k) angewandte Lichtintensität höher als die Referenzlichtintensität ist, die als ein Durchschnitt der aktuell für die Lichtausgabe der Leuchte (220-k) angewandte Lichtintensität und jeweiliger aktuell für die eine oder die mehreren anderen Leuchten (220) angegebener Lichtintensitäten berechnet wird.

5. Leuchte (220-k) nach einem der Ansprüche 2 bis 4, wobei das eine von Erhöhen oder Verringern eines von Erhöhen bzw. Verringern der Lichtintensität, die für die Lichtausgabe der Leuchte (220-k) angewandt wird, um einen vordefinierten Betrag umfasst.

6. Leuchte (220-k) nach einem der Ansprüche 3 bis 5, wobei der vordefinierte Ziellichtpegel einem gewünschten oder erforderlichen Beleuchtungsstärkepegel an einer vordefinierten Position eines Raums einschließlich des Arbeitsbereichs entspricht, zu dessen Beleuchtung das Beleuchtungssystem (100, 200) dient.

7. Leuchte (220-k) nach Anspruch 6, wobei die vordefinierte Position eine Decke des Raums einschließlich des Arbeitsbereichs umfasst, zu dessen Beleuchtung das Beleuchtungssystem (100, 200) dient.

8. Leuchte (220-k) nach Anspruch 6 oder 7, wobei der gewünschte oder erforderliche Beleuchtungsstärkepegel im Wesentlichen 100 lx beträgt.

9. Beleuchtungssystem (200), das eine oder mehrere Leuchten (220) gemäß der Leuchte (220-k) nach einem der Ansprüche 1 bis 8 zum Beleuchten eines Arbeitsbereichs in einem Innenraum umfasst.

10. Verfahren (400) in einer Beleuchtungssteuervorrichtung (110-k) einer Leuchte (220-k), die zum Steuern eines Betriebs der Leuchte (220-k) zum Beleuchten eines Arbeitsbereichs als Teil eines Beleuchtungssystems (200) eingerichtet ist, das eine oder mehrere andere Leuchten (220) umfasst, wobei das Verfahren (400) Folgendes umfasst:
Empfangen (402) eines lokalen Lichtsensorsignals von einem Lichtsensor (141-k) einer Sensoreinheit (140-k) der Leuchte; und
Empfangen (404) von Statusindikationen von der einen oder den mehreren anderen Leuchten (220),
**dadurch gekennzeichnet, dass** das lokale Lichtsensorsignal einen Pegel von Licht beschreibt, das aus einer Richtung des Arbeitsbereichs reflektiert wird, während es keine direkte Lichtausgabe von den Leuchten (220-k, 220) des Beleuchtungssystems (200) angibt,
wobei die Statusindikationen jeweilige Statusindikationen, die Fernlichtpegelindikationen umfassen, die einen Pegel von aus einer Richtung des Arbeitsbereichs reflektierten Licht angeben, welcher an einer jeweiligen der einen oder mehreren anderen Leuchten (220) beobachtet wird, und Statusindikationen, die Fernlichtintensitätsindikationen umfassen, die eine Lichtintensität angeben, die für eine Lichtausgabe einer jeweiligen der einen oder mehreren anderen Leuchten (220) angewandt wird, umfassen, und
wobei das Verfahren (400) ferner Anpassen (406) einer für die Leuchte (220-k) angewandten Lichtintensität in Abhängigkeit von den jeweiligen Pegeln von aus einer Richtung des Arbeitsbereichs reflektiert Lichts, welche bei der Leuchte (220-k) und bei der einen oder den mehreren anderen Leuchten (220) beobachtet werden, in Hinblick auf jeweilige Lichtintensitäten, die für die Lichtausgabe der Leuchte (220-k) und für die jeweilige Lichtausgabe der einen oder der mehreren anderen Leuchten (220) angewandt werden, umfasst.

## Revendications

1. Luminaire (220-k) destiné à éclairer une zone de travail dans le cadre d'un système d'éclairage (200) comprenant un ou plusieurs autres luminaires (220), le luminaire (220-k) comprenant un dispositif de commande d'éclairage (110-k) et une unité de capteurs (140-k) comprenant un capteur de lumière (141-k), le dispositif de commande d'éclairage (110-k) comprenant :
un moyen de commande d'éclairage (111-k) destiné à commander l'émission lumineuse du luminaire (220-k) sur la base, au moins en partie, d'un signal local de capteur de lumière reçu dudit capteur de lumière (141-k) ; et
un moyen de communication (113-k) destiné à communiquer avec le ou les autres luminaires (220) du système d'éclairage (200), le moyen de communication (113-k) étant agencé pour recevoir des indications d'état en provenance du ou des autres luminaires (220),
**caractérisé en ce que** le capteur de lumière (141-k) est adapté à observer un niveau de lumière réfléchie en provenance de la zone de travail sans toutefois recevoir directement l'émission lumineuse desdits luminaires (220-k, 220) du système d'éclairage (200),
dans lequel les indications d'état comprennent des indications d'état respectives comprenant des indications distantes de niveau de lumière qui indiquent un niveau de lumière réfléchie en provenance de la zone de travail observé au niveau d'un luminaire respectif parmi le ou les autres luminaires (220) et des indications d'état comprenant des indications distantes d'intensité lumineuse qui indiquent une intensité lumineuse appliquée pour l'émission lumineuse d'un luminaire respectif parmi le ou les autres luminaires (220), et
dans lequel le moyen de commande d'éclairage (111-k) est agencé pour ajuster une intensité lumineuse appliquée pour le luminaire (220-k) en fonction desdits niveaux respectifs de lumière réfléchie en provenance de la zone de travail observés au niveau du luminaire (220-k) et au niveau du ou des autres luminaires (220) au regard d'intensités lumineuses respectives appliquées pour l'émission lumineuse du luminaire (220-k) et pour l'émission lumineuse respective du ou des autres luminaires (220).

2. Luminaire (220-k) selon la revendication 1, dans lequel le moyen de commande d'éclairage (111-k) est agencé pour soit augmenter soit diminuer l'intensité lumineuse respective appliquée pour l'émission lumineuse du luminaire (220-k) en réponse à un niveau moyen de lumière dérivé sur la base d'une indication locale de niveau de lumière dérivée sur la base du signal local de capteur de lumière et des indications distantes respectives de niveau de lumière reçues du ou des autres luminaires (220) indiquant un niveau global de lumière qui ne répond pas à un ou plusieurs critères prédéfinis de niveau de lumière au regard de l'intensité lumineuse actuellement appliquée pour l'émission lumineuse du luminaire (220-k) en comparaison avec les intensités lumineuses respectives indiquées pour le ou les autres luminaires (220).

3. Luminaire (220-k) selon la revendication 2, dans lequel le moyen de commande d'éclairage (111-k) est agencé pour augmenter l'intensité lumineuse appliquée pour l'émission lumineuse du luminaire (220-k) dès lors que
un niveau moyen de lumière calculé sous la forme d'une moyenne de l'indication locale de niveau de lumière et des indications distantes respectives de niveau de lumière reçues du ou des autres luminaires (220) est inférieur à un niveau de lumière cible prédéfini de plus d'une marge prédéfinie, et
l'intensité lumineuse actuellement appliquée pour l'émission lumineuse du luminaire (220-k) est inférieure à une intensité lumineuse de référence calculée sous la forme d'une moyenne de l'intensité lumineuse actuellement appliquée pour l'émission lumineuse du luminaire (220-k) et d'intensités lumineuses respectives actuellement indiquées pour le ou les autres luminaires (220).

4. Luminaire (220-k) selon la revendication 2 ou 3, dans lequel le moyen de commande d'éclairage (111-k) est agencé pour diminuer l'intensité lumineuse appliquée pour l'émission lumineuse du luminaire (220-k) dès lors que le niveau moyen de lumière calculé sous la forme d'une moyenne de l'indication locale de niveau de lumière et des indications distantes respectives de niveau de lumière reçues du ou des autres luminaires (220) dépasse le niveau de lumière cible prédéfini de plus de la marge prédéfinie, et
l'intensité lumineuse actuellement appliquée pour l'émission lumineuse du luminaire (220-k) est supérieure à l'intensité lumineuse de référence calculée sous la forme d'une moyenne de l'intensité lumineuse actuellement appliquée pour l'émission lumineuse du luminaire (220-k) et d'intensités lumineuses respectives actuellement indiquées pour le ou les autres luminaires (220).

5. Luminaire (220-k) selon l'une quelconque des revendications 2 à 4, dans lequel soit ladite augmentation soit ladite diminution comprend, respectivement, soit une augmentation soit une diminution de l'intensité lumineuse appliquée pour l'émission lumineuse du luminaire (220-k) d'une quantité prédéfinie.

6. Luminaire (220-k) selon l'une quelconque des revendications 3 à 5, dans lequel le niveau de lumière cible prédéfini correspond à un niveau d'éclairement souhaité ou requis à une position prédéfinie d'un espace comportant la zone de travail que le système d'éclairage (100, 200) sert à éclairer.

7. Luminaire (220-k) selon la revendication 6, dans lequel ladite position prédéfinie comprend un plafond de l'espace comportant la zone de travail que le système d'éclairage (100, 200) sert à éclairer.

8. Luminaire (220-k) selon la revendication 6 ou 7, dans lequel ledit niveau d'éclairement souhaité ou requis est sensiblement égal à 100 lx.

9. Système d'éclairage (200) comprenant un ou plusieurs luminaires (220) selon le luminaire (220-k) de l'une quelconque des revendications 1 à 8, destiné à éclairer une zone de travail dans un espace intérieur.

10. Procédé (400) dans un dispositif de commande d'éclairage (110-k) d'un luminaire (220-k) agencé pour commander le fonctionnement du luminaire (220-k) destiné à éclairer une zone de travail dans le cadre d'un système d'éclairage (200) comprenant un ou plusieurs autres luminaires (220), le procédé (400) comprenant :
la réception (402) d'un signal local de capteur de lumière en provenance d'un capteur de lumière (141-k) d'une unité de capteurs (140-k) du luminaire ; et
la réception (404) d'indications d'état en provenance du ou des autres luminaires (220),
**caractérisé en ce que** le signal local de capteur de lumière décrit un niveau de lumière réfléchie en provenance de la zone de travail sans toutefois décrire une émission lumineuse directe desdits luminaires (220-k, 220) du système d'éclairage (200),
dans lequel les indications d'état comprennent des indications d'état respectives comprenant des indications distantes de niveau de lumière qui indiquent un niveau de lumière réfléchie en provenance de la zone de travail observé au niveau d'un luminaire respectif parmi le ou les autres luminaires (220) et des indications d'état comprenant des indications distantes d'intensité lumineuse qui indiquent une intensité lumineuse appliquée pour l'émission lumineuse d'un luminaire respectif parmi le ou les autres luminaires (220), et
le procédé (400) comprenant en outre l'ajustement (406) d'une intensité lumineuse appliquée pour le luminaire (220-k) en fonction desdits niveaux respectifs de lumière réfléchie en provenance de la zone de travail observés au niveau du luminaire (220-k) et au niveau du ou des autres luminaires (220) au regard d'intensités lumineuses respectives appliquées pour l'émission lumineuse du luminaire (220-k) et pour l'émission lumineuse respective du ou des autres luminaires (220).
